# FASCICULE DE BREVET EUROPEEN

(11) **EP 0 654 643 B1**
(45) Date de publication et mention de la délivrance du brevet: **13.01.1999**
(21) Numéro de dépôt: 94402497.5
(22) Date de dépôt: 04.11.1994
(51) Int. Cl.: F25J 3/04, B01D 53/04

(54) **Procédé et installation de distillation d'air**
Verfahren und Anlage zur Luftzerlegung durch Rektifikation
Process and installation for the distillation of air

(30) Priorité: 19.11.1993 FR 9313836
(43) Date de publication de la demande: 24.05.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Arriulou, Pascal, F-94410 Saint Maurice (FR); Bernard, Frédéric, F-92100 Boulogne-Billancourt (FR); Lehman, Jean-Yves, F-94700 Maisons Alfort (FR)
(74) Mandataire: Mercey, Fiona Susan

(56) Documents cités:
- FR-A- 2 484 276
- PATENT ABSTRACTS OF JAPAN vol. 016, no. 145 (M-1233) 10 Avril 1992 & JP-A-04 003 877 (HITACHI LTD) 8 Janvier 1992
- PATENT ABSTRACTS OF JAPAN vol. 17, no. 592 (M-1502) 28 Octobre 1993 & JP-A-05 172 459 (KOBE STEEL LTD) 9 Juillet 1993
- PATENT ABSTRACTS OF JAPAN vol. 13, no. 434 (M-875) 28 Septembre 1989 & JP-A-01 167 566 (NIPPON SANSO K.K.) 3 Juillet 1989

## Description

La présente invention est relative à un procédé de distillation d'air du type dans lequel on comprime de l'air; on refroidit l'air comprimé par échange de chaleur avec de l'eau de refroidissement préalablement réfrigérée par échange de chaleur avec du gaz résiduaire de l'appareil de distillation d'air; on épure en eau et en anhydride carbonique l'air comprimé et refroidi, par adsorption dans une masse d'adsorbant; on régénère la masse d'adsorbant au moyen de gaz résiduaire de l'appareil de distillation d'air porté à une température sensiblement constante modérée et on utilise au moins une partie, et de préférence la totalité, du gaz ayant effectué cette régénération pour réfrigérer l'eau de refroidissement de l'air comprimé, et on effectue la régénération de l'adsorbant au moyen de gaz résiduaire porté à une température de régénération sensiblement constante modérée. Un procédé de ce type est connu de J-A-05172459.

Les installations de production de grandes quantités d'oxygène et/ou d'azote par distillation d'air comportent souvent une tour de réfrigération qui sert à réfrigérer l'eau de refroidissement de l'air comprimé, afin d'abaisser la température de l'air à son entrée dans les bouteilles d'adsorbant. Cette tour est alimentée par du gaz résiduaire (azote impur ou air enrichi en azote) de l'appareil de distillation.

Dans la technique habituelle, une partie seulement du gaz résiduaire alimente la tour de réfrigération, et le reste est utilisé uniquement pour la régénération de l'adsorbant. En effet, le cycle de régénération habituel alterne une phase de chauffage et une phase de refroidissement. Le gaz résiduaire sort alors de la bouteille saturé en eau, avec une température très variable allant de -5°C à +40°C environ. Cette fraction de résiduaire ne peut donc pas être utilisée efficacement pour la réfrigération de l'eau.

Cette technique présente l'inconvénient de limiter fortement le débit de gaz résiduaire disponible pour réfrigérer l'eau, et donc de limiter l'abaissement de température de cette eau. On est ainsi amené à installer sur la conduite d'eau issue de la tour de réfrigération un groupe frigorifique ayant une puissance frigorifique importante.

L'invention a pour but de permettre d'améliorer les performances de la tour de réfrigération. A cet effet, l'invention a pour objet un procédé de distillation d'air du type précité, caractérisé en ce que la température de régénération est comprise entre la température de l'air sortant de la masse d'adsorbant et une température supérieure d'au plus 50°C environ, de préférence de 10 à 20 °C environ, à la température de l'air entrant dans la masse d'adsorbant et en ce que l'on ne refroidit jamais le gaz ayant effectué la régénération avant de l'utiliser pour réfrigérer l'eau de refroidissement de l'air comprimé.

Ce procédé peut comporter en plus une ou plusieurs des étapes suivantes :
- on effectue la régénération de l'adsorbant en une étape unique au moyen de gaz résiduaire à une température sensiblement constante, l'adsorbant étant remis en phase d'adsorption immédiatement après cette étape unique;
- on porte le gaz résiduaire de régénération à ladite température modérée par transfert de chaleur à partir de l'air comprimé n'ayant pas encore subi ledit refroidissement;
- on réalise ledit transfert de chaleur de manière indirecte, au moyen d'un fluide de transfert prélevant de la chaleur sur l'air comprimé n'ayant pas encore subi ledit refroidissement;
- on porte le gaz résiduaire de régénération à ladite température modérée par échange de chaleur avec une fraction de l'air comprimé ayant subi en outre une surpression;
- on utilise en outre le reste du gaz résiduaire de l'appareil de distillation pour réfrigérer l'eau de refroidissement de l'air comprimé.

L'invention a également pour objet une installation de distillation d'air destinée à la mise en oeuvre d'un tel procédé selon l'une des revendications 7, 8 et 9.

Des exemples de mise en oeuvre de l'invention vont maintenant être décrits en regard du dessin annexé, sur lequel :
- la Figure 1 représente schématiquement une installation de distillation d'air conforme à l'invention; et
- la Figure 2 représente schématiquement une variante.

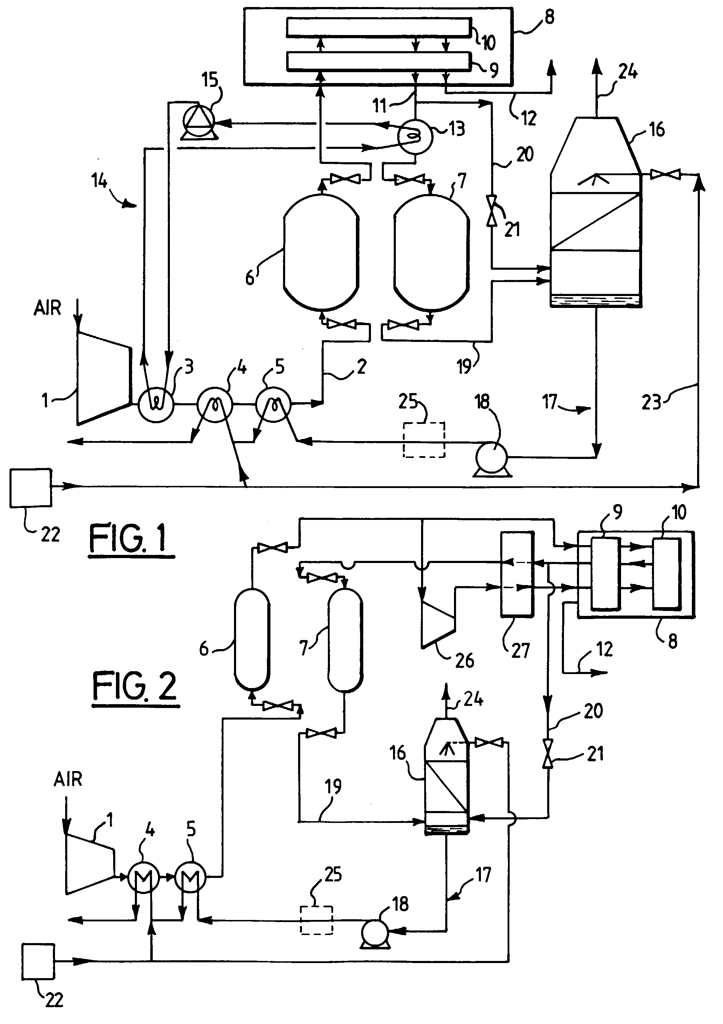

L'installation représentée sur la Figure 1 comprend un compresseur principal d'air 1 sur la conduite de refoulement 2 duquel sont montés successivement trois échangeurs de chaleur indirects 3 à 5 en série; deux bouteilles d'adsorption 6, 7 à fonctionnement alterné; une boîte froide 8 contenant une ligne d'échange thermique principale 9 et un appareil 10 de distillation d'air, qui peut être une double colonne de distillation produisant notamment de l'oxygène, ou bien une simple colonne de distillation produisant de l'azote; une conduite 11 de gaz résiduaire de l'appareil de distillation, sortant du bout chaud de la ligne d'échange thermique 9 et aboutissant à celle des bouteilles 6 et 7 qui est en phase de régénération (la bouteille 7 dans l'exemple représenté); une conduite de production 12 partant du bout chaud de la ligne d'échange thermique; un échangeur de chaleur 13 monté dans la conduite 11 entre la boîte froide 8 et les bouteilles 6, 7; un circuit d'eau de chauffage 14, à pompe de circulation 15, entre les échangeurs 3 et 13; une tour de réfrigération eau/gaz résiduaire 16, par exemple du type à garnissage; et un circuit d'eau de refroidissement 17 à pompe de circulation 18. Pour simplifier le dessin, on n'a représenté que schématiquement les moyens permettant la commutation des bouteilles d'adsorption 6 et 7 entre leurs phases alternées d'adsorption et de régénération, et on a représenté l'échangeur 13 associé à la seule bouteille 7 qui est en phase de régénération.

On décrira maintenant le fonctionnement de l'installation, avec un exemple d'application numérique.

L'air atmosphérique à traiter est comprimé en 1 à une moyenne pression de 6 bars absolus, puis refroidi en trois étapes en 3, 4, 5, d'une température de l'ordre de 100°C à une température de 13,5°C. Cet air est introduit dans la bouteille 6 en phase d'adsorption, d'où il ressort à 18,5°C du fait de la chaleur d'adsorption de l'eau et du C02. L'air épuré pénètre ensuite dans la boîte froide 8, où il est refroidi puis distillé de façon classique.

Le gaz résiduaire de l'appareil 10 sort de la boîte froide via la conduite 11 et est divisé en deux courants :
- Un premier courant est réchauffé vers + 30°C en 13, puis pénètre dans l'autre bouteille 7, dont il assure la régénération. Ce gaz ressort de la bouteille 7 vers + 6°C, puis est envoyé, via une conduite 19, à la base de la tour de réfrigération 16.
- Le reste du gaz résiduaire est directement envoyé, via une conduite 20 équipée d'une vanne 21, à la base de la tour 16.

La pompe 15 fait circuler de l'eau, en circuit fermé, de l'échangeur 3, où elle prélève de la chaleur sur l'air comprimé par le compresseur 1, à l'échangeur 13, où l'eau cède sa chaleur au gaz résiduaire pour l'amener à la température modérée précitée de + 30°C.

De l'eau de refroidissement à + 20°C, provenant d'une source appropriée 22, par exemple d'une nappe phréatique, alimente directement l'échangeur 4, ce qui ramène l'air comprimé vers + 25°C. Pour poursuivre le refroidissement de cet air, de l'eau provenant de la même source 22 est envoyé via une conduite 23 en tête de la tour 16, dans laquelle elle se refroidit de haut en bas au contact du gaz résiduaire, lequel est introduit à la base de la tour via les conduites 19 et 20 et est évacué au sommet de la tour via une conduite 24.

De cette manière, l'eau ressort au bas de la tour 16 à + 8,5°C, et elle est envoyée par la pompe 18 dans l'échangeur 5.

Ceci permet d'abaisser la température de l'air comprimé, avant son entrée dans la bouteille 6, à + 13,5°C, et l'air épuré ressort de la bouteille 6 à + 18,5°C pour pénétrer dans la boîte froide 8. Si on souhaite une température plus basse de l'air à épurer, on peut, comme représenté en pointillé, monter un groupe frigorifique 25 de faible puissance dans la conduite d'alimentation en eau de l'échangeur 5.

Lorsque la bouteille 6 est presque saturée, on inverse les bouteilles 6 et 7. L'air sortant, après épuration, de la bouteille 7 est alors initialement vers + 30°C au lieu des 18,5°C du régime établi. Une onde de chaleur pénètre donc dans la boîte froide, mais cette onde de chaleur est suffisamment faible pour être facilement absorbée par l'inertie thermique de la ligne d'échange thermique 9.

Grâce à la technique décrite ci-dessus, le gaz résiduaire servant à la régénération de l'adsorbant sort de la bouteille 6 ou 7 à une température à peu près constante et suffisamment basse (+6°C dans l'exemple fourni) pour être utilisée comme réfrigérant dans la tour 16. La totalité du gaz résiduaire de l'appareil de distillation peut donc servir à la réfrigération de l'eau de refroidissement du compresseur, de sorte que cette eau peut être refroidie à une température basse. Le gain immédiat est la réduction de la taille du groupe frigorifique situé généralement en aval de la tour sur le circuit d'eau, voire même sa disparition.

De plus, du fait du niveau relativement bas de la température de régénération, la chaleur nécessaire peut être récupérée en sortie du compresseur, la température de l'air en sortie de compression avoisinant 100°C.

En variante, on pourrait d'ailleurs envisager un échange de chaleur indirect entre l'air sortant du compresseur et le gaz résiduaire sortant de la boîte froide, sans intervention du circuit d'eau intermédiaire 14.

En variante encore, comme représenté sur la Figure 2, dans le cas où une partie au moins de l'air épuré est surpressé en 26 avant son entrée dans la ligne d'échange thermique 9, le chauffage du gaz résiduaire de régénération peut s'effectuer dans un échangeur de chaleur auxiliaire 27, par échange de chaleur entre ce gaz et la fraction d'air surpressé. Dans ce cas, le circuit d'eau 14 peut être supprimé, comme représenté sur la Figure 2.

L'invention s'applique également aux installations comprenant un appareil de distillation d'air qui produit un gaz résiduaire sous pression. Dans ce cas, la tour de réfrigération eau/azote peut être fermée et fonctionner sous pression.

## Revendications

1. Procédé de distillation d'air, du type dans lequel on comprime de l'air (en 1); on refroidit l'air comprimé (en 5) par échange de chaleur avec de l'eau de refroidissement préalablement réfrigérée (en 16) par échange de chaleur avec du gaz résiduaire de l'appareil de distillation d'air (10); on épure en eau et en anhydride carbonique (en 6) l'air comprimé et refroidi, par adsorption dans une masse d'adsorbant; on régénère la masse d'adsorbant (en 7) au moyen de gaz résiduaire de l'appareil de distillation d'air; et on utilise au moins une partie, et de préférence la totalité, du gaz ayant effectué cette régénération pour réfrigérer (en 16) l'eau de refroidissement de l'air comprimé, et on effectue la régénération de l'adsorbant au moyen de gaz résiduaire porté à une température de régénération sensiblement constante modérée, caractérisé en ce que la température de régénération est comprise entre la température de l'air sortant de la masse d'adsorbant et une température supérieure d'au plus 50°C environ, de préférence de 10 à 20°C environ, à la température de l'air entrant dans la masse d'adsorbant et en ce que l'on ne refroidit jamais le gaz ayant effectué la régénération avant de l'utiliser pour réfrigérer l'eau de refroidissement de l'air comprimé.

2. Procédé suivant la revendication 1, caractérisé en ce qu'on effectue la régénération de l'adsorbant en une étape unique au moyen de gaz résiduaire à une température sensiblement constante, l'adsorbant étant remis en phase d'adsorption immédiatement après cette étape unique.

3. Procédé suivant la revendication 1 ou 2, caractérisé en ce qu'on porte le gaz résiduaire de régénération à ladite température modérée par transfert de chaleur (en 14) à partir de l'air comprimé n'ayant pas encore subi ledit refroidissement.

4. Procédé suivant la revendication 3, caractérisé en ce qu'on réalise ledit transfert de chaleur de manière indirecte (en 14), au moyen d'un fluide de transfert prélevant de la chaleur (en 3) sur l'air comprimé n'ayant pas encore subi ledit refroidissement.

5. Procédé suivant la revendication 1 ou 2, caractérisé en ce qu'on porte le gaz résiduaire de régénération à ladite température modérée par échange de chaleur (en 27) avec une fraction de l'air comprimé ayant subi en outre une surpression (en 26).

6. Procédé suivant l'une quelconque des revendications 1 à 5, caractérisé en ce qu'on utilise en outre le reste du gaz résiduaire de l'appareil de distillation pour réfrigérer (en 16) l'eau de refroidissement de l'air comprimé.

7. Installation de distillation d'air, du type comprenant : un appareil de distillation d'air (10); un compresseur principal d'air (1); un premier échangeur de chaleur (5) qui met l'air comprimé en relation d'échange thermique avec de l'eau de refroidissement; une tour (16) de réfrigération d'eau qui met l'eau de refroidissement, en amont dudit échangeur de chaleur, avec du gaz résiduaire de l'appareil de distillation; un appareil d'épuration d'air en eau et en anhydride carbonique qui comprend au moins deux bouteilles d'adsorption (6, 7) et des moyens pour mettre alternativement ces bouteilles en phase d'adsorption et en phase de régénération de l'adsorbant; des moyens (11) pour alimenter la bouteille (6) en phase de régénération avec du gaz résiduaire de l'appareil de distillation; et des moyens (13; 27) de chauffage du gaz résiduaire de régénération; les moyens de chauffage du gaz résiduaire de régénération étant adaptés pour porter ce gaz à une température de régénération sensiblement constante modérée, notamment comprise entre la température de l'air entrant dans la masse d'adsorbant et une température supérieure d'au plus 50 °C environ, de préférence de 10 à 20 °C environ, à cette température de l'air entrant, et en ce que l'installation comprend des moyens (19) pour envoyer à la tour de réfrigération (16) le gaz résiduaire de régénération issu de la bouteille d'adsorption (7) en phase de régénération, caractérisée en ce qu'elle comprend des moyens (3, 13, 14) de transfert de chaleur de l'air comprimé au gaz résiduaire de régénération avant l'entrée de celui-ci dans la bouteille d'adsorption (7) en phase de régénération, ces moyens comprenant un deuxième échangeur de chaleur (13) prévu à l'entrée de cette bouteille, un troisième échangeur de chaleur (3) prévu entre le refoulement du compresseur d'air (1) et ledit premier échangeur de chaleur (5), et un circuit (14) de fluide de transfert entre lesdits deuxième et troisième échangeurs.

8. Installation de distillation d'air, du type comprenant : un appareil de distillation d'air (10); un compresseur principal d'air (1); un premier échangeur de chaleur (5) qui met l'air comprimé en relation d'échange thermique avec de l'eau de refroidissement; une tour (16) de réfrigération d'eau qui met l'eau de refroidissement, en amont dudit échangeur de chaleur, avec du gaz résiduaire de l'appareil de distillation; un appareil d'épuration d'air en eau et en anhydride carbonique qui comprend au moins deux bouteilles d'adsorption (6, 7) et des moyens pour mettre alternativement ces bouteilles en phase d'adsorption et en phase de régénération de l'adsorbant; des moyens (11) pour alimenter la bouteille (6) en phase de régénération avec du gaz résiduaire de l'appareil de distillation; et des moyens (13; 27) de chauffage du gaz résiduaire de régénération; les moyens de chauffage du gaz résiduaire de régénération étant adaptés pour porter ce gaz à une température de régénération sensiblement constante modérée, notamment comprise entre la température de l'air entrant dans la masse d'adsorbant et une température supérieure d'au plus 50 °C environ, de préférence de 10 à 20 °C environ, à cette température de l'air entrant, et en ce que l'installation comprend des moyens (19) pour envoyer à la tour de réfrigération (16) le gaz résiduaire de régénération issu de la bouteille d'adsorption (7) en phase de régénération, caractérisée en ce qu'elle comprend des moyens (3, 13, 14) de transfert de chaleur de l'air comprimé au gaz résiduaire de régénération avant l'entrée de celui-ci dans la bouteille d'adsorption (7) en phase de régénération, ces moyens comprenant un deuxième échangeur de chaleur prévu à l'entrée de cette bouteille et mettant le gaz résiduaire de régénération en relation d'échange thermique avec l'air sortant du compresseur d'air.

9. Installation de distillation d'air, du type comprenant : un appareil de distillation d'air (10); un compresseur principal d'air (1); un premier échangeur de chaleur (5) qui met l'air comprimé en relation d'échange thermique avec de l'eau de refroidissement; une tour (16) de réfrigération d'eau qui met l'eau de refroidissement, en amont dudit échangeur de chaleur, avec du gaz résiduaire de l'appareil de distillation; un appareil d'épuration d'air en eau et en anhydride carbonique qui comprend au moins deux bouteilles d'adsorption (6, 7) et des moyens pour mettre alternativement ces bouteilles en phase d'adsorption et en phase de régénération de l'adsorbant; des moyens (11) pour alimenter la bouteille (6) en phase de régénération avec du gaz résiduaire de l'appareil de distillation; et des moyens (13; 27) de chauffage du gaz résiduaire de régénération; les moyens de chauffage du gaz résiduaire de régénération étant adaptés pour porter ce gaz à une température de régénération sensiblement constante modérée, notamment comprise entre la température de l'air entrant dans la masse d'adsorbant et une température supérieure d'au plus 50 °C environ, de préférence de 10 à 20 °C environ, à cette température de l'air entrant, et en ce que l'installation comprend des moyens (19) pour envoyer à la tour de réfrigération (16) le gaz résiduaire de régénération issu de la bouteille d'adsorption (7) en phase de régénération, caractérisée en ce qu'elle comprend en outre un surpresseur (26) d'une partie au moins de l'air épuré, et des moyens (27) pour mettre l'air surpressé en relation d'échange thermique avec le gaz résiduaire de régénération avant l'entrée de celui-ci dans la bouteille d'adsorption (7) en phase de régénération.

## Patentansprüche

1. Verfahren zur Destillation von Luft, bei dem Luft (in 1) verdichtet wird, die verdichtete Luft (in 5) durch Wärmeaustausch mit Kühlwasser, das zuvor (in 16) durch Wärmeaustausch mit Restgas der Luftdestillationsvorrichtung (10) gekühlt wurde, gekühlt wird, die verdichtete und gekühlte Luft (in 6) in einer Adsorptionsmittelmasse durch Adsorption von Wasser und Kohlendioxid gereinigt wird, die Adsorptionsmittelmasse (in 7) mittels des Restgases der Luftdestillationsvorrichtung regeneriert wird und zumindest ein Teil, vorzugsweise die Gesamtheit des Gases, das die Regeneration bewirkt hat, verwendet wird, um (in 16) das Kühlwasser für die verdichtete Luft zu kühlen und die Regeneration des Adsorptionsmittels mittels Restgas, das auf eine ungefähr konstante, mäßige Regenerationstemperatur gebracht ist, durchgeführt wird, **dadurch gekennzeichnet,** daß die Regenerationstemperatur zwischen der Temperatur der aus der Adsorptionsmittelmasse austretenden Luft und einer Temperatur liegt, die höchstens ungefähr 50°C, vorzugsweise ungefähr 10 bis 20°C, über der Temperatur der in die Adsorptionsmittelmasse eintretenden Luft liegt, und daß das Gas, das die Regeneration bewirkt hat, bevor es zur Kühlung des Kühlwassers für die verdichtete Luft verwendet wird, zu keinem Zeitpunkt gekühlt wird.

2. Verfahren nach Anspruch 1, dadurch gekennzeichnet, daß die Regeneration des Adsorptionsmittels mittels Restgas bei einer ungefähr konstanten Temperatur in einem einzigen Schritt erfolgt, wobei das Adsorptionsmittel nach diesem einzigen Schritt sofort in die Adsorptionsphase übergeht.

3. Verfahren nach Anspruch 1 oder 2, dadurch gekennzeichnet, daß das Regenerationsrestgas (in 14) durch Wärmeübertragung, ausgehend von der verdichteten Luft, die nicht der Kühlung unterzogen wurde, auf die mäßige Temperatur gebracht wird.

4. Verfahren nach Anspruch 3, dadurch gekennzeichnet, daß die Wärmeübertragung mittels eines Übertragungsfluids, das (in 3) die Wärme von der verdichteten Luft bezieht, die noch nicht der Kühlung unterzogen wurde, indirekt erfolgt.

5. Verfahren nach Anspruch 1 oder 2, dadurch gekennzeichnet, daß das Regenerationsrestgas durch Wärmeaustausch (in 27) mit einer Fraktion der verdichteten Luft, die zudem einer Nachverdichtung (in 26) unterzogen wurde, auf die mäßige Temperatur gebracht wird.

6. Verfahren nach einem der Ansprüche 1 bis 5, dadurch gekennzeichnet, daß zudem der Rest des Restgases der Destillationsvorrichtung verwendet wird, um (in 16) das Kühlwasser für die verdichtete Luft zu kühlen.

7. Anlage zur Destillation von Luft, umfasssend: eine Luftdestillationsvorrichtung (10), einen Hauptluftverdichter (1), einen ersten Wärmeaustauscher (5) zum Wärmeaustausch zwischen der verdichteten Luft und dem Kühlwasser, einen Kühlwasserturm (16), der stromauf des Wärmeaustauschers das Kühlwasser mit dem Restgas der Destillationsvorrichtung zusammen bringt, eine Vorrichtung zur Reinigung von Luft von Wasser und Kohlendioxid, welche mindestens zwei Adsorptionsflaschen (6, 7) und Mittel umfaßt, um die Flaschen wahlweise in Adsorptionsphase und in Regenerationsphase des Adsorptionsmittels zu bringen, Mittel (11), um die in Regenerationsphase befindliche Flasche (6) mit Restgas der Destillationsvorrichtung zu versorgen und Mittel (13; 27) zum Anwärmen des Regenerationsrestgases, wobei die Anwärmmittel für das Regenerationsrestgas ausgelegt sind, um das Gas auf eine ungefähr konstante, mäßige Regenerationstemperatur zu bringen, die zwischen der Temperatur der in die Adsorptionsmittelmasse eintretenden Luft und einer Temperatur liegt, die höchstens ungefähr 50°C, vorzugsweise ungefähr 10 bis 20°C, über der Temperatur der eintretenden Luft liegt, und die Anlage Mittel (19) umfaßt, um das aus der in Regenerationsphase befindlichen Adsorptionsflasche (7) stammende Regenerationsrestgas in den Kühlturm (16) einzuleiten, dadurch gekennzeichnet, daß sie Mittel (3, 13, 14) zum Wärmeübertrag von der verdichteten Luft zu dem Regenerationsrestgas umfaßt, bevor dieses in die in Regenerationsphase befindliche Adsorptionsflasche (7) eintritt, wobei die Mittel einen zweiten Wärmeaustauscher (13) am Einlaß dieser Flasche, einen dritten Wärmeaustauscher (3) zwischen dem Auslaß des Luftverdichters (1) und dem ersten Wärmeaustauscher (5) und einen Übertragungsfluidkreis (14) zwischen dem zweiten und dem dritten Austauscher umfaßt.

8. Anlage zur Destillation von Luft, umfassend: eine Luftdestillationsvorrichtung (10), einen Hauptluftverdichter (1), einen ersten Wärmeaustauscher (5), der den Wärmeaustausch der verdichteten Luft mit dem Kühlwasser bewirkt, einen Kühlwasserturm (16), der das Kühlwasser stromauf des Wärmeaustauschers mit Restgas der Destillationsvorrichtung in Verbindung bringt, eine Vorrichtung zur Reinigung von Luft von Wasser und Kohlendioxid, die mindestens zwei Adsorptionsflaschen (6, 7) und Mittel umfaßt, um diese Flaschen wahlweise in Adsorptionsphase und in Regenerationsphase des Adsorptionsmittels zu bringen, Mittel (11), um die in Regenerationsphase befindliche Flasche (6) mit dem Restgas der Destillationsvorrichtung zu versorgen und Mittel (13; 27) zum Anwärmen des Regenerationsrestgases, wobei die Mittel zum Anwärmen des Regenerationsrestgases ausgelegt sind, um dieses Gas auf eine ungefähr konstante, mäßige Regenerationstemperatur zu bringen, die insbesondere zwischen der Temperatur der in die Adsorptionsmittelmasse eintretenden Luft und einer Temperatur liegt, die höchstens ungefähr 50°C, vorzugsweise ungefähr 10 bis 20°C, über der Temperatur der eintretenden Luft liegt, und die Anlage Mittel (19) umfaßt, um das aus der in Regenerationsphase befindliche Adsorptionsflasche (7) stammende Regenerationsrestgas in den Kühlturm (16) einzuleiten, dadurch gekennzeichnet, daß sie Mittel (3, 13, 14) zum Übertragen von Wärme von der verdichteten Luft zu dem Regenerationsrestgas umfaßt, bevor dieses in die in Regenerationsphase befindliche Adsorptionsflasche (7) eintritt, wobei diese Mittel einen zweiten Wärmeaustauscher (13) am Einlaß dieser Flasche umfassen und den Wärmeaustausch des Regenerationsrestgases mit der aus dem Luftverdichter austretenden Luft bewirken.

9. Anlage zur Destillation von Luft, umfassend: eine Luftdestillationsvorrichtung (10), einen Hauptluftverdichter (1), einen ersten Wärmeaustauscher (5), der den Wärmeaustausch der verdichteten Luft mit dem Kühlwasser bewirkt, einen Kühlwasserturm (16), der das Kühlwasser stromauf des Wärmeaustauschers mit dem Restgas der Destillationsvorrichtung in Verbindung bringt, eine Vorrichtung zur Reinigung von Luft von Wasser und Kohlendioxid, die mindestens zwei Adsorptionsflaschen (6, 7) und Mittel umfaßt, um diese Flaschen wahlweise in Adsorptionsphase und in Regenerationsphase des Adsorptionsmittels zu bringen, Mittel (11), um die Flasche (6) in der Regenerationsphase mit dem Restgas der Destillationsvorrichtung zu versorgen, und Mittel (13; 27) zum Anwärmen des Regenerationsrestgases, wobei die Mittel zum Anwärmen des Regenerationsrestgases ausgelegt sind, um dieses Gas auf eine ungefähr konstante, mäßige Regenerationstemperatur zu bringen, die insbesondere zwischen der Temperatur der in die Adsorptionsmittelmasse eintretenden Luft und einer Temperatur liegt, die höchstens ungefähr 50°C, vorzugsweise ungefähr 10 bis 20°C, über der Temperatur der eintretenden Luft liegt, und die Anlage Mittel (19) umfaßt, um das aus der in Regenerationsphase befindlichen Adsorptionsflasche (7) stammende Regenerationsrestgas in den Kühlturm (16) einzuleiten, dadurch gekennzeichnet, daß sie zudem einen Verdichter (26) für mindestens einen Teil der gereinigten Luft und Mittel (27) umfaßt, um die verdichtete Luft in Wärmeaustausch mit dem Regenerationsrestgas zu bringen, bevor dieses in die in der Regenerationphase befindliche Adsorptionsflasche (7) eintritt.

## Claims

1. Process for the distillation of air, of the type in which air is compressed (in 1); the compressed air is cooled (in 5) by heat exchange with cooling water previously cooled (in 16) by heat exchange with waste gas from the air distillation apparatus (10); the compressed and cooled air is purified of water and carbon dioxide (in 6), by adsorption in a mass of adsorbent; the mass of adsorbent is regenerated (in 7) by means of waste gas from the air distillation apparatus; and at least a part, and preferably all, of the gas which has carried out this regeneration is used to cool (in 16) the cooling water of the compressed air, and the adsorbent is regenerated by means of waste gas brought to a substantially constant, moderate regeneration temperature, characterized in that the regeneration temperature is inclusive between the temperature of the air leaving the mass of adsorbent and a temperature which is higher by approx. 50 °C maximum, preferably approx. 10 to 20 °C, than the temperature of the air entering the mass of adsorbent and in that the gas which has carried out the regeneration is never cooled before it is used to cool the cooling water of the compressed air.

2. Process according to Claim 1, characterized in that the adsorbent is regenerated in a single step by means of waste gas at a substantially constant temperature, the adsorbent being returned to adsorption phase immediately after this single step.

3. Process according to Claim 1 or 2, characterized in that the waste regeneration gas is brought to the said moderate temperature by heat transfer (in 14) starting from the compressed air which has not yet undergone the said cooling.

4. Process according to Claim 3, characterized in that the said heat transfer is conducted in indirect manner (in 14), by means of a transfer fluid taking heat (in 3) from the compressed air which has not yet undergone the said cooling.

5. Process according to Claim 1 or 2, characterized in that the waste regeneration gas is brought to the said moderate temperature by heat exchange (in 27) with a fraction of the compressed air which has also undergone a boosting (in 26).

6. Process according to one of Claims 1 to 5, characterized in that the remainder of the waste gas from the distillation apparatus is also used to cool (in 16) the cooling water of the compressed air.

7. Air distillation installation, of the type comprising: an air distillation apparatus (10); a main air compressor (1); a first heat exchanger (5) which places the compressed air in heat exchange relationship with cooling water; a water cooling tower (16) which places the cooling water, upstream of the said heat exchanger, with waste gas from the distillation apparatus; an apparatus for purifying air of water and carbon dioxide which comprises at least two adsorption bottles (6, 7) and means for putting these bottles alternately in adsorption phase and regeneration phase of the adsorbent; means (11) for supplying the bottle (6) in regeneration phase with waste gas from the distillation apparatus; and means (13; 27) for heating waste regeneration gas; the means for heating the waste regeneration gas being suitable for bringing this gas to a substantially constant, moderate regeneration temperature, particularly inclusive between the temperature of the air entering the mass of adsorbent and a temperature higher by approx. 50 °C maximum, preferably approx. 10 to 20 °C, than this temperature of the incoming air, and in that the installation comprises means (19) for conveying to the cooling tower (16) the waste regeneration gas coming from the adsorption bottle (7) in regeneration phase, characterized in that it comprises means (3, 13, 14) for transferring heat from the compressed air to the waste regeneration gas before the latter enters the adsorption bottle (7) in regeneration phase, these means comprising a second heat exchanger (13) provided at the inlet of this bottle, a third heat exchanger (3) provided between the discharge of the air compressor (1) and the said first heat exchanger (5), and a transfer fluid circuit (14) between the said second and third exchangers.

8. Air distillation installation, of the type comprising: an air distillation apparatus (10); a main air compressor (1); a first heat exchanger (5) which places the compressed air in heat exchange relationship with cooling water; a water cooling tower (16) which places the cooling water, upstream of the said heat exchanger, with waste gas from the distillation apparatus; an apparatus for purifying air of water and carbon dioxide which comprises at least two adsorption bottles (6, 7) and means for putting these bottles alternately in adsorption phase and regeneration phase of the adsorbent; means (11) for supplying the bottle (6) in regeneration phase with waste gas from the distillation apparatus; and means (13; 27) for heating waste regeneration gas; the means for heating the waste regeneration gas being suitable for bringing this gas to a substantially constant, moderate regeneration temperature, particularly inclusive between the temperature of the air entering the mass of adsorbent and a temperature higher by approx. 50 °C maximum, preferably approx. 10 to 20 °C, than this temperature of the incoming air, and in that the installation comprises means (19) for conveying to the cooling tower (16) the waste regeneration gas coming from the adsorption bottle (7) in regeneration phase, characterized in that it comprises means (3, 13, 14) for transferring heat from the compressed air to the waste regeneration gas before the latter enters the adsorption bottle (7) in regeneration phase, these means comprising a second heat exchanger provided at the inlet of this bottle and putting the waste regeneration gas in heat exchange relationship with the air leaving the air compressor.

9. Air distillation installation, of the type comprising: an air distillation apparatus (10); a main air compressor (1); a first heat exchanger (5) which places the compressed air in heat exchange relationship with cooling water; a water cooling tower (16) which places the cooling water, upstream of the said heat exchanger, with waste gas from the distillation apparatus; an apparatus for purifying air of water and carbon dioxide which comprises at least two adsorption bottles (6, 7) and means for putting these bottles alternately in adsorption phase and regeneration phase of the adsorbent; means (11) for supplying the bottle (6) in regeneration phase with waste gas from the distillation apparatus; and means (13; 27) for heating waste regeneration gas; the means for heating the waste regeneration gas being suitable for bringing this gas to a substantially constant, moderate regeneration temperature, particularly inclusive between the temperature of the air entering the mass of adsorbent and a temperature higher by approx. 50 °C maximum, preferably approx. 10 to 20 °C, than this temperature of the incoming air, and in that the installation comprises means (19) for conveying to the cooling tower (16) the waste regeneration gas coming from the adsorption bottle (7) in regeneration phase, characterized in that it further comprises a booster (26) of a part at least of the purified air, and means (27) for placing the boosted air in heat exchange relationship with the waste regeneration gas before the latter enters the adsorption bottle (7) in regeneration phase.
